# EUROPEAN PATENT APPLICATION

(11) **EP 2 341 668 A1**
(43) Date of publication of application: **06.07.2011**
(21) Application number: 10305007.6
(22) Date of filing: 05.01.2010
(51) Int. Cl.: H04L 12/46, H04L 12/66

(54) **Transport of a traffic flow in a mobile communication system**

(71) Applicant: Alcatel Lucent, 75008 Paris (FR)
(72) Inventor: Barzaghi, Giorgio, 20056, GREZZAGO (IT); Boiocchi, Gianluca, 24046, OSIO SOTTO (IT); Lometti, Alberto, 46049, VOLTA MANTOVANA (IT); Busi, Italo, 20023, CERRO MAGGIORE (IT)
(74) Representative: Colombo, Stefano Paolo

(57) **Abstract**

It is disclosed a method for transmitting a traffic flow in a radio communication system comprising a core network, a radio access network and a gateway interfacing the core network and the radio access network. The method comprises: providing an LSP between the gateway and a first node of the core network, and providing a VLAN between the gateway and a second node of the radio access network; associating to a segment of the traffic flow an MPLS label uniquely identifying the LSP and a VLAN identifier uniquely identifying the VLAN, the VLAN identifier being biuniquely associated to the MPLS label; in the core network, transmitting a packet comprising the segment and the MPLS label between the gateway and the first node along the LSP; and in the radio access network, transmitting the segment with the VLAN identifier between the gateway and the second node over the VLAN.

## Description

### Technical field

The present invention generally relates to the field of mobile communication systems. More particularly, the present invention relates to the transport of a traffic flow in a mobile communication system comprising a core network and a radio access network.

### Background art

In a known MPLS (Multi Protocol Label Switching) network, traffic flows are transported in the form of MPLS packets that are switched along predefined virtual paths or tunnels termed "label switched paths". An MPLS packet typically has a payload comprising a portion of a traffic flow and an MPLS header including a 20-bit MPLS label. An MPLS label uniquely identifies the label switched path that all the packets having that MPLS label must follow through the MPLS network. Each node of an MPLS network receives MPLS packets, reads their MPLS labels and accordingly switches them along their predefined label switched paths, until they reach their destination nodes.

Different types of traffic may be encapsulated in MPLS packets and transported over an MPLS network, such as for instance: IP packets, ATM cells, SDH/SONET frames, Ethernet frames, etc.

The MPLS technique also provides for monitoring the label switched paths by means of a set of OAM (Operation, Administration and Management) functions. The OAM functions are adapted to check path integrity, transmission performance, or the like. The OAM functions are typically implemented by exchanging OAM-dedicated MPLS packets along the label switched paths to be monitored.

On the other hand, the known PW (Pseudo-Wire) technique allows transparent transport across a packet-switched network (e.g. an Ethernet network, an MPLS network, etc.) of a traffic flow (typically, a TDM traffic flow, an ATM traffic flow or an Ethernet traffic flow) exchanged between two endpoints connected to the packet-switched network. The expression "transparent transport" means that the features of the traffic flow (for instance, constant bit-rate for SDH/SONET traffic flows) are preserved by transmission across the packet-switched network. According to the PW technique, when a traffic flow has to be transmitted across a packet-switched network, the ingress node through which the data flow enters the packet-switched network typically performs an interworking function (e.g. it fragments the traffic flow into packets either by taking into account the structure of the traffic flow, or ignoring it) and then adds a 4-byte pseudo-wire label in each packet. The pseudo-wire label uniquely identifies the traffic flow. Optionally, a 4-byte control word may be inserted in each packet, comprising information such as packet sequence number, payload length, flags indicating possible defect conditions, etc. The packets are then switched across the packet-switched network, until they reach an egress node. The egress node typically recovers the original traffic flow using the pseudo-wire labels and the control words of the received packets.

A mobile communication system typically comprises an aggregation/core network (herein after termed "core network", for simplicity) and a radio access network (also termed "backhauling network"). The nodes of the radio access network are typically arranged according to a tree topology whose root is connected (by means of a wired optical or electrical link) to a node of the core network, where aggregated traffic flows (typically, E1, ATM or Ethernet traffic flows) carrying services of radio access network are exchanged. Each node of the radio access network is typically connected (by means of a wired optical or electrical link) to one or more base stations configured to exchange traffic with mobile user terminals located within their coverage areas. The core network is typically a wired MPLS network configured to support the PW technique. On the other hand, the radio access network typically is a radio TDM network, a radio hybrid TDM/Ethernet network or a packet radio network (e.g. exploiting Ethernet transport layer).

A mobile communication system may support delivery of different types of services carried by different traffic flows, namely: voice services carried by E1 or SDH/SONET traffic flows, data services carried by ATM traffic flows and data/voice services carried by Ethernet traffic flows. In particular, a radio access network implemented as a radio TDM network typically supports transmission of E1 traffic flows and transmission of ATM traffic flows encapsulated in E1 frames. On the other hand, a radio access network implemented as a radio hybrid TDM/Ethernet network typically supports transmission of E1 traffic flows, transmission of ATM traffic flows encapsulated in E1 frames, and transmission of Ethernet traffic flows. Besides, a radio access network implemented as a packet radio network typically supports transmission of E1, SDH/SONET or ATM traffic flows encapsulated in Ethernet frames, and transmission of Ethernet traffic flows.

A service may require transmission of downstream traffic flows (i.e. traffic flows transmitted from the core network to a base station) and/or upstream traffic flows (i.e. traffic flows transmitted from a base station to the core network).

When a service provider wishes to deliver a service requiring transmission of a downstream traffic flow to a base station connected to a node of the radio access network, the downstream traffic flow carrying the service is associated to a pseudo-wire label, while a label switching path is provisioned between the node of the core network through which the downstream traffic flow enters the core network and the node of the core network which is connected to the root of the radio access network. Then, the downstream traffic flow with the associated pseudo-wire label is encapsulated in MPLS packets that are transmitted along the label switching path. More pseudo-wires may be multiplexed on a same label switching path, i.e. different traffic flows may be encapsulated in MPLS packets having a same MPLS label.

Then, the node of the core network which is connected to the root of the radio access network performs an interworking function, i.e. it extracts the downstream traffic flow and the associated pseudo-wire label from the MPLS packets, removes the pseudo-wire label and forwards the traffic flow to the root of the radio access network.

Then, assuming that the radio access network is a packet radio network and the traffic flow is an E1, SDH/SONET or ATM traffic flow, the root of the radio access network encapsulates the extracted downstream traffic flow in Ethernet frames, and transmits the Ethernet frames to the node of the radio access network to which the destination base station is connected. This node receives the Ethernet frames, retrieves the downstream traffic flow and forwards the retrieved downstream traffic flow to the destination base station.

Besides, if the downstream traffic flow is an Ethernet traffic flow, the root of the radio access network merely transmits the downstream traffic flows itself (i.e. the Ethernet frames) to the node of the radio access network to which the destination base station is connected. This node receives the downstream traffic flow and forwards it to the destination base station.

A symmetrical processing is performed on upstream traffic flows.

### Summary of the invention

The Applicant has noticed that the above known solution for transmitting a (either upstream or downstream) traffic flow in a mobile communication system has some drawbacks.

The above solution indeed disadvantageously does not allow performing an end-to-end control of the path followed by the traffic flow between the node at which the traffic flow enters/exits the core network and the base stations.

This is disadvantageously due to the fact that the radio access network does not support MPLS. While in the core network MPLS allows defining a *priori* label switched paths and monitoring the label switched paths, such capabilities are not supported by the radio access network. The label switched paths must be terminated by the interworking function between the core network and the radio access network. At the same time, all the OAM-dedicated MPLS packets configured to monitor the label switched paths must be terminated by the interworking function.

This disadvantageously implies that in the radio access network the paths followed by the traffic flows can not be engineered, i.e. they can not be determined *a priori* by the network operator taking into account resource availability, traffic conditions in the network. This disadvantageously prevents the network operator from optimally exploiting the resources of the radio access network. Besides, this may prevent the network operator from meeting the Service Level Agreements stipulated with its customers.

In theory, the above drawbacks may be overcome by implementing the MPLS technique also in the radio access network.

However, network apparatuses supporting the MPLS technique are very complex and, accordingly, their installation and maintenance is very expensive. In other words, the OPEX (OPeration EXpenditure) and CAPEX (CApital EXpenditure) of an MPLS network are typically very high. This makes the MPLS technique almost inapplicable to a radio access network. Indeed, a radio access network has very stringent requirements in terms of low OPEX and low CAPEX. For complying with these requirements, the apparatuses of a radio access network should therefore be very simple.

Further, MPLS requires a very large amount of bandwidth for transmitting MPLS headers, OAM-dedicated MPLS messages and other information necessary for implementing the label-switching mechanism. However, the bandwidth of a radio network is very costly. Accordingly, MPLS is not suitable for application in the radio access network of a mobile communication system.

An object of the present invention is therefore providing a method for transmitting a traffic flow in a mobile communication system that overcomes the aforesaid drawbacks.

In particular, an object of the present invention is providing a method for transmitting a traffic flow in a mobile communication system that allows performing an end-to-end control of the traffic flow, and that at the same time can be implemented with a very reduced bandwidth and substantially without increasing the OPEX and CAPEX of the radio access network.

According to a first aspect, the present invention provides a method for transmitting a traffic flow in a radio communication system comprising a core network, a radio access network and a gateway interfacing the core network and the radio access network, the method comprising:
a) providing a label switched path between the gateway and a first node of the core network, and providing a virtual local area network between the gateway and a second node of the radio access network;
b) associating to a segment of the traffic flow a first label uniquely identifying the label switched path and an identifier uniquely identifying the virtual local area network, the identifier being biuniquely associated to the first label;
c) in the core network transmitting a packet comprising the segment and the first label between the gateway and the first node along the label switched path, and in the radio access network transmitting the segment with the identifier between the gateway and the second node over the virtual local area network.

Preferably, if the traffic flow is a downstream traffic flow, step c) comprises:
c1) at the first node, encapsulating the segment in the packet comprising the first label, and label-switching the packet along the label switched path;
c2) at the gateway, extracting the segment from the packet and transmitting the segment with the identifier over the virtual local area network; and
c3) at the second node, merging the segment with other segments of the traffic flow, thereby retrieving the traffic flow.

Preferably, if the traffic flow is an upstream traffic flow, step c) comprises:
c1') at the second node, transmitting the segment with the identifier over the virtual local area network;
c2') at the gateway, encapsulating the segment in the packet comprising the first label and label-switching the packet along the label switched path; and
c3') at the first node, extracting the segment from the packet and merging the segment with other segments of the traffic flow, thereby retrieving the traffic flow.

Preferably, in step c) transmitting the segment with the identifier between the gateway and the second node over the virtual local area network comprises transmitting the segment in a frame comprising the identifier in a header thereof.

Preferably, in step c):
- transmitting the packet comprising the segment and the first label between the gateway and the first node along the label switched path comprises transmitting in the packet also a second label uniquely identifying the traffic flow; and
- transmitting the segment with the identifier between the gateway and the second node over the virtual local area network comprises transmitting also the first label in the frame.

Preferably, the method further comprises:
b') associating to a further segment of a further traffic flow the first label and the identifier;
c') in the core network transmitting a further packet comprising the further segment and the first label between the gateway and the first node along the label switched path, and in the radio access network transmitting the further segment with the identifier between the gateway and the second node over the virtual local area network.

Preferably in step c):
- transmitting the packet comprising the segment and the first label between the gateway and the first node along the label switched path comprises transmitting in the packet also a control word comprising information allowing to merge the segment with the other segments of the traffic flow for retrieving the traffic flow; and
- transmitting the segment with the identifier between the gateway and the second node over the virtual local area network comprises transmitting also the control word in the frame.

Preferably, transmitting the segment with the identifier between the gateway and the second node over the virtual local area network comprises inserting the identifier in the segment and transmitting the segment with the identifier inserted therein over the virtual local area network.

Preferably, the method further comprises:
- associating to an operation and maintenance packet the first label and the identifier;
- in the core network, transmitting the operation and maintenance packet comprising the first label between the gateway and the first node along the label switched path;
- in the radio access network, transmitting a still further frame comprising the operation and maintenance packet and the identifier in a header thereof between the gateway and the second node over the virtual local area network; and
- at the first node and at the second node, processing the operation and maintenance packet for performing an end-to-end operation and maintenance function of the traffic flow.

Preferably, in step b), associating comprises mapping the first label into the identifier, the first label having a size in bits longer than the identifier.

Preferably:
- if the traffic flows comprises a sequence of time division multiplexing frames, the segment comprises at least a portion of a time division multiplexing frames;
- if the traffic flows comprises a sequence of asynchronous transfer mode cells, the segment comprises one or more asynchronous transfer mode cells; and
- if the traffic flows comprises an sequence of Ethernet frames, the segment comprises an Ethernet frame.

According to a second aspect, the present invention provides a gateway suitable for interfacing a core network and a radio access network of a mobile communication system, the gateway comprising:
- a gateway module configured to associate, to a segment of a traffic flow exchanged between a first node of the core network and a second node of the radio access network, a first label uniquely identifying a label switched path between the gateway and the first node, and an identifier uniquely identifying a virtual local area network between the gateway and the second node, the identifier being biuniquely associated to the first label;
- a network-network interface configured to exchange, with the first node along the label switched path, a packet comprising the segment and the first label; and
- a radio interface configured to exchange, with the second node over the virtual local area network, the segment with the identifier.

According to a third aspect, the present invention provides a node of a radio access network for a mobile communication system, the node comprising:
- an interworking module configured to associate, to a segment of a traffic flow exchanged between the node and a further node of a core network connected to the radio access network by means of a gateway, an identifier uniquely identifying a virtual local area network between the node and the gateway, the identifier being biuniquely associated to a label uniquely identifying a label switched path between the gateway and the further node; and
- a radio interface configured to exchange, with the gateway over the virtual local area network, the segment with the identifier.

According to a fourth aspect, the present invention provides a radio access network for a mobile communication system, wherein the radio access network comprises a node as set forth above.

According to a fifth aspect, the present invention provides a mobile communication system comprising a core network, a radio access network and a gateway suitable for interfacing the core network and the radio access network, wherein the radio access network and the gateway are as set forth above.

### Brief description of the drawings

The present invention will become clearer by reading the following detailed description, given by way of example and not of limitation, to be read by referring to the accompanying drawings, wherein:
- Figure 1 schematically shows an exemplary mobile communication system;
- Figures 2a-2c schematically shows three steps of the method for transmitting a traffic flow in the mobile communication system of Figure 1, according to a first embodiment of the present invention;
- Figures 3a-3c schematically shows three steps of the method for transmitting a traffic flow in the mobile communication system of Figure 1, according to a second embodiment of the present invention;
- Figure 4 schematically shows the structure of a node of the radio access network of the mobile communication system of Figure 1; and
- Figure 5 schematically shows the structure of the gateway of the mobile communication system of Figure 1.

### Detailed description of preferred embodiments of the invention

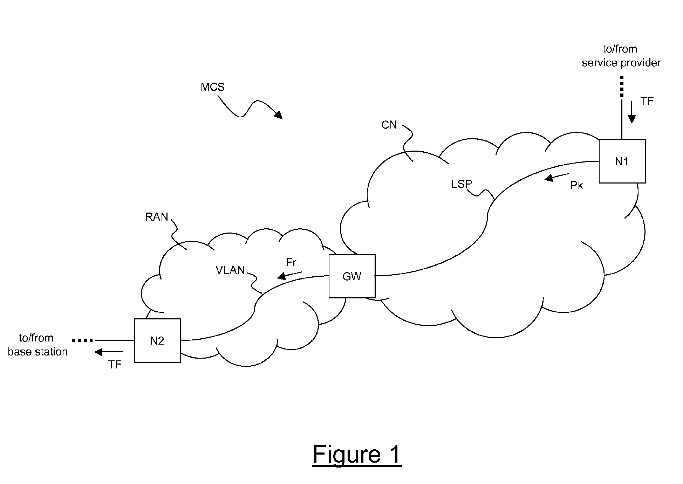

Figure 1 schematically shows an exemplary mobile communication system MCS. The mobile communication system MCS of Figure 1 comprises a core network CN, a radio access network RAN and a gateway GW interfacing the core network CN and the radio access network RAN.

The core network CN comprises a number of nodes connected according to any topology (for instance, mesh topology, ring topology, etc.). On the other hand, the radio access network RAN comprises a number of nodes connected each other according to a tree topology, whose root (not shown in Figure 1) is connected to the gateway GW. Each node of the radio access network RAN may be connected to one or more base stations (not shown in Figure 1). In Figure 1, for simplicity, a single node N1 of the core network CN and a single node N2 of the radio access network RAN are shown.

In the exemplary mobile communication system MCS of Figure 1, the core network CN is a wired MPLS network in which the connectivity between nodes at Layer 1 and Layer 2 of the OSI model may be implemented by any Layer 1 and Layer 2 protocol, such as for instance Ethernet, SDH/SONET, etc.

Further, in the exemplary communication system MCS of Figure 1, the radio access network RAN is a packet radio network (more particularly, a radio Ethernet network) whose nodes (included the node N2 shown in Figure 1) are preferably configured to implement the known VLAN (Virtual Local Area Network) tagging option. According to the VLAN tagging option, an Ethernet frame may be VLAN-tagged by inserting a 4-byte VLAN header in its Ethernet header. In particular, the VLAN header is typically inserted between the Source Address field and the Length/Type field of the Ethernet header. The VLAN header comprises, *inter alia,* a 12-bit VLAN identifier uniquely identifying a virtual local area network over which all the Ethernet frames having that VLAN identifier have to be transmitted. All the nodes of an Ethernet network implementing the VLAN tagging option are configured for determining whether a received Ethernet frame is VLAN-tagged and, in the affirmative, to read its VLAN identifier and forward it towards one or more output ports associated to the VLAN identifier.

The mobile communication system MCS is configured to deliver voice and/or data services to mobile terminals of users located within the coverage area of base stations connected to the nodes of the radio access network RAN. To this purpose, the mobile communication system MCS supports transmission of upstream and downstream traffic flows between nodes of the core network CN and nodes of the radio access network RAN through the gateway GW.

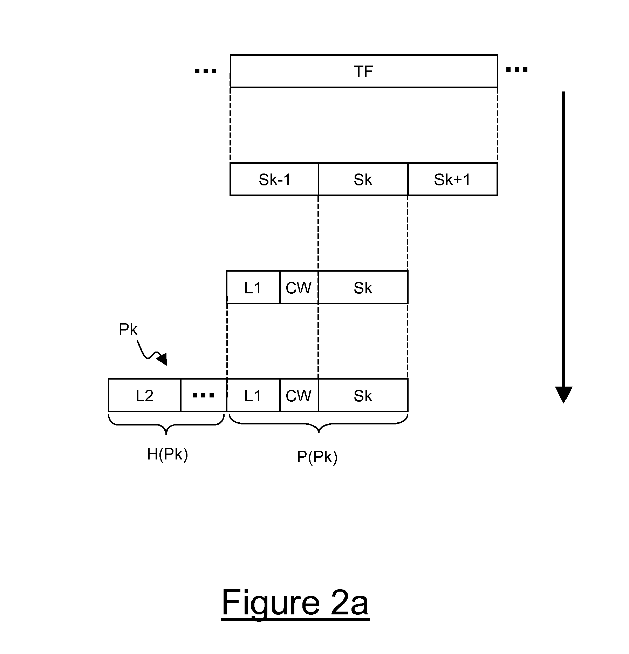

Herein after, by referring to Figures 2a-2c, the operation of the mobile communication system MCS according to a first embodiment of the present invention will be described in detail, under the assumption that a downstream traffic flow TF carrying a voice and/or a data service has to be transmitted from the node N1 of the core network CN to the node N2 of the radio access network RAN through the gateway GW.

The traffic flow may be for instance an E1 traffic flow (i.e. it comprises a sequence of E1 frames), an SDH/SONET traffic flow (i.e. it comprises a sequence of SDH/SONET frames) or an ATM traffic flow (i.e. it comprises ATM cells).

With reference to Figure 2a, when the node N1 receives the traffic flow TF from the service provider, it preferably divides the traffic flow TF in a number of segments. In Figure 2a, a portion of the traffic flow TF is shown, that is divided in three segments Sk-1, Sk and Sk+1 (k=1, 2, 3, etc.). In case of E1 traffic flow, each segment preferably comprises at least a portion of an E1 frame. In case of SDH/SONET traffic flow, each segment preferably comprises a portion of an SDH/SONET frame. In case of ATM traffic flow, each segment preferably comprises one or more ATM cells. The size in bits of each segment is preferably selected as a result of a trade-off between latency (the longer the segments, the higher is their store-and-forward latency) and throughput efficiency (the shorter the segments, the lower is the throughput efficiency i.e. the ratio between segment size and overhead required for transporting the segments).

Herein after, for simplicity only the processing of the segment Sk will be described in detail. However, the processing of the segments Sk-1, Sk and Sk+1 is substantially the same.

The node N1 preferably associates to the segment Sk a pseudo-wire label L1 uniquely identifying the traffic flow TF. Therefore, all the segments derived from the traffic flow TF (included the segments Sk1, Sk and Sk+1) are associated to a same pseudo-wire label L1. Optionally, the node N1 also preferably associates to the segment Sk a control word CW comprising information allowing to properly merge the segment Sk with the other segments for recovering the traffic flow TF.

The node N1 then preferably encapsulates the segment Sk with the associated pseudo-wire label L1 and the control word CW in an MPLS packet Pk having an MPLS header H(Pk) and a payload P(Pk). In particular, the node N1 inserts the segment Sk with the associated pseudo-wire label L1 and the control word CW in the payload P(Pk) of the MPLS packet Pk. Further, the node N1 preferably inserts in the MPLS header H(Pk) an MPLS label L2 and other information that are not shown in the drawings, since they are not relevant to the present description. The MPLS label L2 preferably uniquely identifies a label switched path LSP (shown in Figure 1) that joins the node N1 and the gateway GW across the core network CN and that must be followed by the MPLS packet Pk and by all the other MPLS packets having the same MPLS label L2. The label switched path LSP may pass through a number of intermediate nodes of the core network CN, which intermediate nodes are not shown in Figure 1 for simplicity.

The pseudo-wire label L1, the label switched path LSP and the MPLS label L2 are preferably provisioned before starting transmission of the traffic flow TF. MPLS packets carrying segments derived from the traffic flow TF may have MPLS label L2 equal to the MPLS label of MPLS packets carrying other traffic flows. In other words, different pseudo-wires may be multiplexed on the label switched path LSP.

The MPLS packet Pk is then transmitted along the label switched path LSP from the node N1 to the gateway GW, possibly through intermediate nodes not shown in Figure 1. For implementing transmission at Layer 1 and Layer 2 of the OSI model in the core network CN, the MPLS packet Pk may be further encapsulated in a data unit (not shown in the drawings) formatted according to the Layer 1 and Layer 2 protocol(s) implementing the connectivity between nodes at Layer 1 and Layer 2 of the OSI model in the core network CN. For instance, if the connectivity between nodes at Layer 1 and Layer 2 of the OSI model in the core network CN is implemented by SDH/SONET, the data unit is preferably a synchronous frame of the SDH/SONET hierarchy.

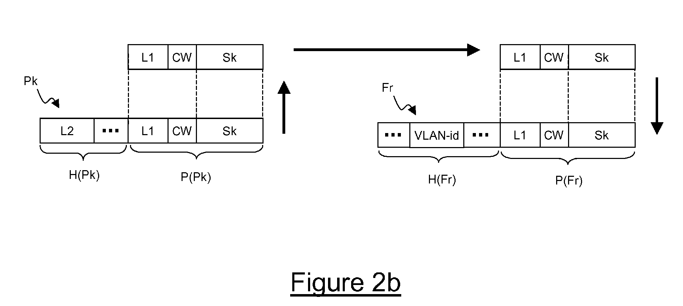

With reference to Figure 2b, when the gateway GW receives the MPLS packet Pk from the label switched path LSP, it preferably extracts the segment Sk with the associated pseudo-wire label L1 and the optional control word CW from the payload P(Pk) of the MPLS packet Pk.

Then, preferably, the gateway GW encapsulates the segment Sk with the associated pseudo-wire label L1 and the optional control word CW in a Ethernet frame Fr having an Ethernet header H(Fr) and a payload P(Fr). In particular, the gateway GW preferably encapsulates the segment Sk with the associated pseudo-wire label L1 and the optional control word CW in the payload P(Fr) of the Ethernet frame Fr.

Then, the gateway GW preferably reads the MPLS label L2. It should be noticed that the value of the MPLS label L2 comprised in the MPLS packet Pk as received by the gateway GW may be different from the value of the MPLS label L2 comprised in the MPLS packet Pk as transmitted by the node N1. This is due to the fact that, as known, the intermediate nodes of a label switched path perform a so-called "label swapping", i.e. they change value of the MPLS label of each incoming MPLS packet. However, all the values that an MPLS label may assume due to label swapping uniquely identify the same label switched path.

Then, the gateway GW preferably inserts into the Ethernet header H(Fr) of the Ethernet frame Fr a VLAN header including a identifier VLAN-id biuniquely associated to the MPLS label L2. The VLAN header with the VLAN identifier VLAN-id is preferably inserted between the Source Address field and the Length/Type field (not shown in Figure 2b) of the Ethernet header H(Fr). For simplicity, in Figure 2b only the VLAN identifier VLAN-id is shown instead of the whole VLAN header. Preferably, the VLAN identifier VLAN-id uniquely identifies a virtual local area network VLAN (shown in Figure 1) that joins the gateway GW and the node N2 across the radio access network RAN. All the VLAN-tagged Ethernet frames having that VLAN identifier VLAN-id must be transmitted over the virtual local area network VLAN.

The virtual local area network VLAN and the VLAN identifier VLAN-id are preferably provisioned before starting transmission of the traffic flow TF. While an MPLS label typically has a length 20-bit, a VLAN identifier typically has a length of 12 bits. Therefore, the operation of provisioning a VLAN identifier VLAN-id biuniquely associated to the MPLS label L2 substantially requires mapping the longer MPLS label L2 into a shorter VLAN identifier VLAN-id.

Therefore, while in a known mobile communication system at the interface between core network and radio access network the interworking function retrieves the original traffic flow from the MPLS packets (i.e. it terminates both the label switched path and the pseudo-wire carrying the traffic flow), in the communication system MCS only the label-switched path LSP is terminated (by removing the MPLS label L2), while the pseudo-wire is not terminated, and is mapped over the virtual local area network VLAN biuniquely associated to the terminated label-switched path LSP.

The gateway GW then preferably transmits the Ethernet frame Fr to the node N2 over the virtual local area network VLAN provisioned across the radio access network RAN.

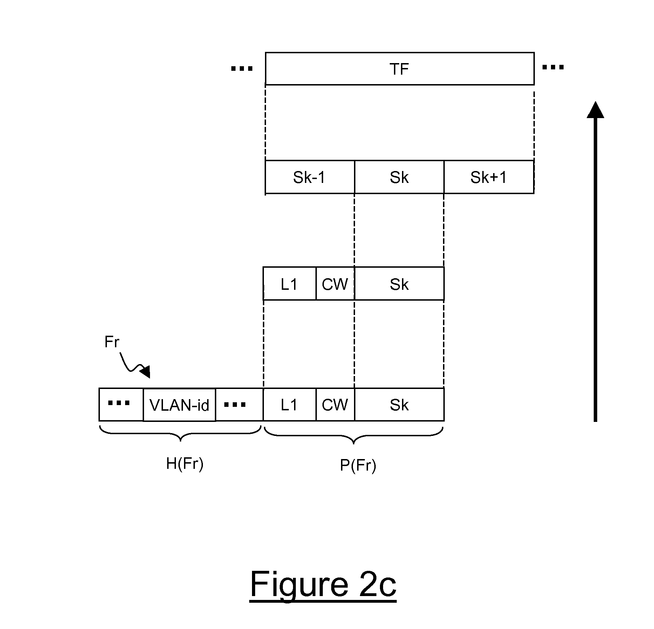

With reference to Figure 2c, when the node N2 receives the Ethernet frame Fr from the virtual local area network VLAN, it preferably extracts the segment Sk with the associated pseudo-wire label L1 and the optional control word CW from the payload P(Fr) of the Ethernet frame Fr. Then, preferably, upon reception of the other Ethernet frames carrying the other segments Sk-1 and Sk+1, the node N2 uses the pseudo-wire label L1 and the control word CW for properly merging the segments Sk-1, Sk, Sk+1, thereby recovering the portion of traffic flow TF. The node N2 then forwards the recovered traffic flow TF to a base station connected thereto.

Therefore, advantageously, the above described method for transmitting the traffic flow TF from the node N1 of the core network CN to the node N2 of the radio access network RAN advantageously provides an end-to-end control of the traffic flow.

Indeed, thanks to the VLAN tagging option, the gateway GW may transfer the traffic flow TF encapsulated in MPLS packets received from the label switched path LSP into VLAN-tagged Ethernet frames that will be transported over the virtual local area network VLAN. In other words, all the pseudo-wires multiplexed on the label switched path LSP are transferred to the virtual local area network VLAN. Similarly to a label switched path in an MPLS network, a virtual local area network may be provisioned in an Ethernet network. Therefore, the VLAN tagging option allows "emulating" in the radio access network the path provisioning functionality typical of the MPLS technique, without the need of implementing the MPLS technique itself in the radio access network.

Therefore, also in the radio access network the paths followed by the traffic flows may be advantageously engineered, i.e. they can be determined *a priori* by the network operator taking into account resource availability, traffic conditions in the network. This advantageously allows the network operator to optimally exploit the resources of the radio access network. Besides, this advantageously allows the network operator to guarantee that the Service Level Agreements stipulated with its customers are met. Indeed, the VLAN header comprises, in addition to the VLAN identifier, a priority field that may be used for implementing a Quality of Service mechanism within the radio access network. The Quality of Service mechanism may be implemented also by associating a Class of Service to the VLAN identifier itself. Alternatively, the Quality of Service mechanism may be implemented by retrieving a priority value comprised in the payload of the Ethernet frames (for instance, the DSCP field of IP packets).

Further, advantageously, the above solution does not increase OPEX and CAPEX of the radio access network. Indeed, most of Ethernet apparatuses used in current radio access networks are already configured for supporting the VLAN tagging option. In any case, upgrading an Ethernet apparatus so that it supports the VLAN tagging option is advantageously much simpler and economic than adding new apparatuses supporting the MPLS technique.

Further, the above solution advantageously requires a very reduced amount of additional bandwidth in comparison to the MPLS technique. Implementing the VLAN tagging option indeed merely requires inserting a short VLAN header in the Ethernet frames, while implementing MPLS would require using more complex data structures having much longer headers.

Further, advantageously, the OAM functions of the MPLS technique may be advantageously applied end-to-end to the path followed by the traffic flow TF. Indeed, as mentioned above, implementing OAM functions requires periodically transmitting OAM-dedicated MPLS packets along the label switched path to be monitored. According to particularly advantageous variants of the present invention, when the gateway GW receives an OAM-dedicated MPLS packet having a given MPLS label, it preferably encapsulates it in a VLAN-tagged Ethernet frame having a VLAN identifier biuniquely associated to the MPLS label of the OAM-dedicated MPLS packet. Preferably, according to this advantageous variants, the nodes of the radio access network are equipped with an OAM module capable of processing OAM-dedicated MPLS packets. Therefore, when a node of the radio access network receives from a virtual local area network an Ethernet frame encapsulating an OAM-dedicated MPLS packet, it preferably extracts the OAM-dedicated MPLS packet and processes it. Similarly, the OAM module of the node may generate OAM-dedicated MPLS packets that the node may encapsulate in VLAN-tagged Ethernet frames and transmit to the gateway GW across the radio access network RAN. Therefore, according to this advantageous variant, the nodes of the core network and the nodes of the radio access network may exchange OAM-dedicated MPLS packets, thereby implementing end-to-end OAM functions.

The above description refers to transmission of a downstream traffic flow. The method for transmitting an upstream traffic flow is symmetrical, therefore a detailed description will not be repeated.

The method will be only briefly summarized, under the assumption that the upstream traffic flow carries the same service as the downstream traffic flow TF referred to above. In view of this, it can be assumed that the pseudo-wire label L1, the label switched path LSP, the MPLS label L2, the virtual local area network VLAN and the VLAN identifier VLAN-id provisioned for this upstream traffic flow are equal to that provisioned for the downstream traffic flow TF.

At the node N2, the upstream traffic flow is preferably divided in segments, each segment is associated to the pseudo-wire label L1 and optionally to a control word CW. Each segment with the associated pseudo-wire label L1 and the optional control word is encapsulated in the payload of an Ethernet frame whose Ethernet header comprises the VLAN identifier VLAN-id. The Ethernet frames are then transmitted to the gateway GW over the virtual local area network VLAN.

At the gateway GW, each segment with the associated pseudo-wire label L1 and the optional control word CW is extracted from the respective Ethernet frame and is encapsulated in an MPLS packet. The MPLS packet comprises the MPLS label L2 biuniquely associated to the VLAN identifier VLAN-id. The MPLS packets are then transmitted to the node N1 along the label switched path LSP.

At the node N1, each segment with the associated pseudo-wire label L1 and the optional control word CW is extracted from the respective MPLS packet. The node N1, thanks to the pseudo-wire label L1 and the optional control words recovers the original upstream traffic flow.

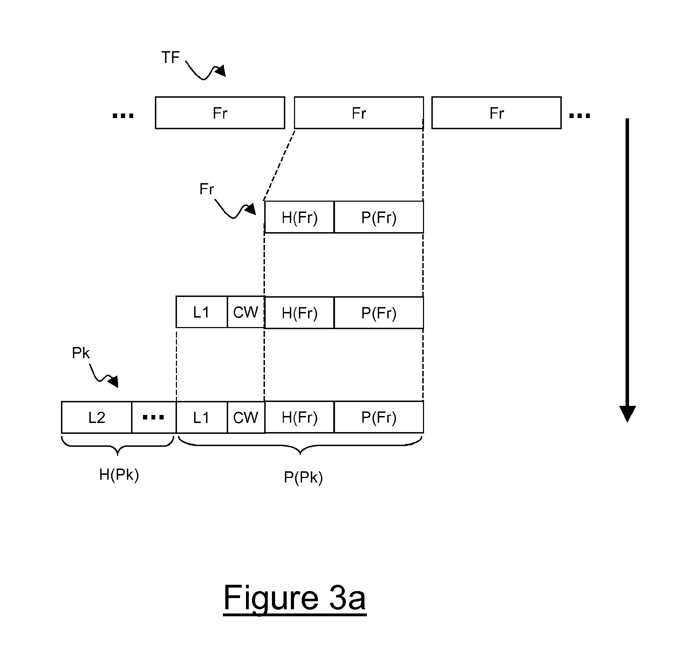

As mentioned above, the traffic flow TF may be an E1 traffic flow, an SDH/SONET traffic flow or an ATM traffic flow. Herein after, by referring to Figures 3a-3c, the operation of the mobile communication system MCS according to a second embodiment of the present invention will be described in detail, under the assumption that the traffic flow TF is an Ethernet traffic flow, i.e. it comprises Ethernet frames Fr. Each Ethernet frame Fr comprises an Ethernet header H(Fr) and a payload P(Fr).

With reference to Figure 3a, when the node N1 receives an Ethernet frame Fr from the service provider, it preferably associates to the Ethernet frame Fr a pseudo-wire label L1 uniquely identifying the traffic flow TF. Therefore, all the Ethernet frames Fr of the traffic flow TF are associated to a same pseudo-wire label L1. Optionally, the node N1 also preferably associates to the Ethernet frame Fr a control word CW. The control word CW is preferably associated to the Ethernet frame Fr for implementing an in-band OAM mechanism, such as the VCCV (Virtual Circuit Connectivity Verification). In this case, a first portion (preferably, the first 4 bits) of the control word CW is preferably used for distinguishing Ethernet frames carrying user traffic from OAM Ethernet frames

The node N1 then preferably encapsulates the Ethernet frame Fr with the associated pseudo-wire label L1 and the control word CW in an MPLS packet Pk having an MPLS header H(Pk) and a payload P(Pk). In particular, the node N1 inserts the Ethernet frame Fr with the associated pseudo-wire label L1 and the control word CW in the payload P(Pk) of the MPLS packet Pk. Further, the node N1 preferably inserts in the MPLS header H(Pk) an MPLS label L2 and other information that are not shown in the drawings, since they are not relevant to the present description. The MPLS label L2 preferably uniquely identifies a label switched path LSP (shown in Figure 1) that joins the node N1 and the gateway GW across the core network CN and that must be followed by the MPLS packet Pk and by all the other MPLS packets having the same MPLS label L2. The label switched path LSP may pass through a number of intermediate nodes of the core network CN, which intermediate nodes are not shown in Figure 1 for simplicity.

Also according to this second embodiment, the pseudo-wire label L1, the label switched path LSP and the MPLS label L2 are preferably provisioned before starting transmission of the traffic flow TF. MPLS packets carrying Ethernet frames Fr of the traffic flow TF may have MPLS label L2 equal to the MPLS label of MPLS packets carrying other traffic flows. In other words, different pseudo-wires may be multiplexed on the label switched path LSP.

Similarly to the first embodiment, also according to this second embodiment the MPLS packet Pk is then transmitted along the label switched path LSP from the node N1 to the gateway GW, possibly through intermediate nodes not shown in Figure 1. For implementing transmission at Layer 1 and Layer 2 of the OSI model in the core network CN, the MPLS packet Pk may be further encapsulated in a data unit (not shown in the drawings) formatted according to the Layer 1 and Layer 2 protocol(s) implementing the connectivity between nodes at Layer 1 and Layer 2 of the OSI model in the core network CN. For instance, if the connectivity between nodes at Layer 1 and Layer 2 of the OSI model in the core network CN is implemented by SDH/SONET, the data unit is preferably a synchronous frame of the SDH/SONET hierarchy.

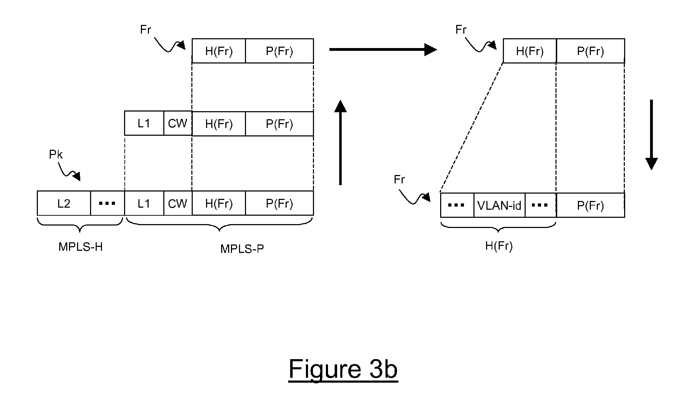

With reference to Figure 3b, when the gateway GW receives the MPLS packet Pk from the label switched path LSP, it preferably extracts the Ethernet frame Fr from the payload P(Pk) of the MPLS packet Pk. According to this second embodiment, the associated pseudo-wire label L1 and the optional control word CW are preferably removed, since they are not needed for transmitting the Ethernet frame Fr over the radio access network RAN. This is due to the fact that the Ethernet frame Fr is already formatted according to the protocol implementing transmission at Layers 1 and 2 of the OSI model in the radio access network, i.e. Ethernet. Therefore, according to this second embodiment, the PW technique is useless in the radio access network RAN.

Then, preferably, the gateway GW reads the MPLS label L2. As mentioned above, due to the label swapping mechanism the value of the MPLS label L2 comprised in the MPLS packet Pk as received by the gateway GW may be different from the value of the MPLS label L2 comprised in the MPLS packet Pk as transmitted by the node N1. However, all the values that an MPLS label may assume due to label swapping uniquely identify the same label switched path.

Then, the gateway GW preferably inserts into the Ethernet header H(Fr) of the Ethernet frame Fr a VLAN header including a identifier VLAN-id biuniquely associated to the MPLS label L2. The VLAN header with the VLAN identifier VLAN-id is preferably inserted between the Source Address field and the Length/Type field (not shown in Figure 3b) of the Ethernet header H(Fr). For simplicity, in Figure 3b only the VLAN identifier VLAN-id is shown instead of the whole VLAN header. Preferably, the VLAN identifier VLAN-id uniquely identifies a virtual local area network VLAN (shown in Figure 1) that joins the gateway GW and the node N2 across the radio access network RAN. All the VLAN-tagged Ethernet frames having that VLAN identifier VLAN-id must be transmitted over the virtual local area network VLAN.

Also according to this second embodiment, the virtual local area network VLAN and the VLAN identifier VLAN-id are preferably provisioned before starting transmission of the traffic flow TF. While an MPLS label typically has a length 20-bit, a VLAN identifier typically has a length of 12 bits. Therefore, the operation of provisioning a VLAN identifier VLAN-id biuniquely associated to the MPLS label L2 substantially requires mapping the longer MPLS label L2 into a shorter VLAN identifier VLAN-id.

The gateway GW then preferably transmits the Ethernet frame Fr (that is now VLAN-tagged) to the node N2 over the virtual local area network VLAN provisioned across the radio access network RAN.

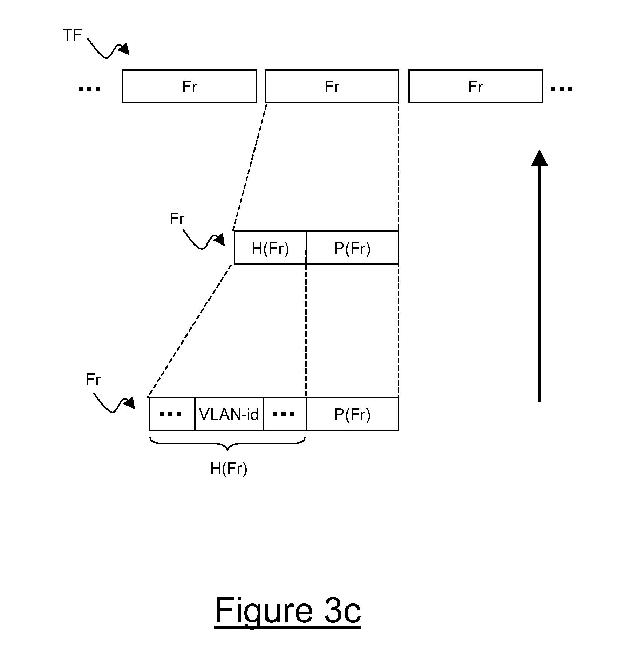

With reference to Figure 3c, when the node N2 receives the Ethernet frame Fr from the virtual local area network VLAN, it preferably removes the VLAN header including the VLAN identifier VLAN-id from the Ethernet header H(Fr) of the Ethernet frame Fr. The node N2 then preferably forwards the Ethernet frame Fr to the base station connected to the node N2, together with the other received Ethernet frames Fr of the traffic flow TF.

The method for transmitting a traffic flow in a mobile communication system according to this second embodiment basically has the same advantages of the first embodiment, that accordingly will not be repeated.

At the same time, the method according to this second embodiment is even simpler than the method according to the first embodiment. Indeed, thanks to the fact that the traffic flow to be transmitted and the radio access network are based on the same technology (i.e. Ethernet), the encapsulation of the traffic flows in Ethernet frames and the PW technique are not required for transmitting the traffic flow over the radio access network.

According to further embodiments not shown in the drawings, the service provider may decide that the PW technique is not needed in the radio access network, even if the traffic flow to be transmitted is not an Ethernet traffic flow (it is e.g. an E1, SDH/SONET or ATM traffic flow). In that case, the gateway GW receiving the MPLS packets carrying segments of the traffic flow from the node N1 of the core network preferably removes the pseudo-wire label L1 and the optional control word CW, and encapsulates only the segments of traffic flow in the Ethernet frames to be transmitted over the virtual local area network VLAN in the radio access network RAN.

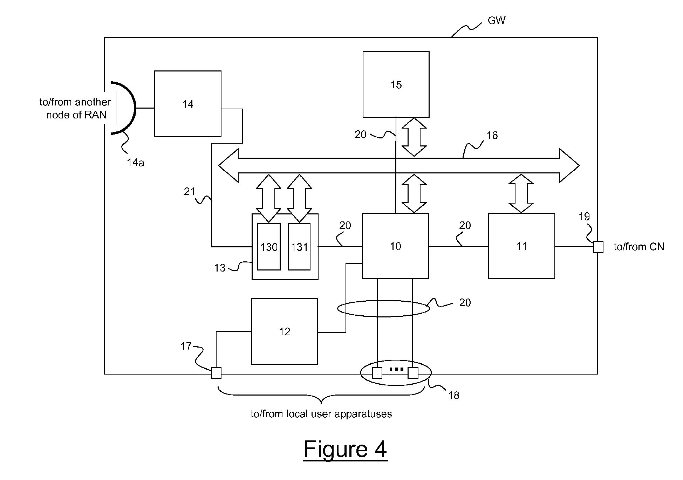

Figure 4 schematically shows the structure of a gateway GW according to a preferred embodiment of the present invention. It is assumed that the Layer 1 and Layer 2 connectivity in the core network CN is implemented by Ethernet.

The gateway GW preferably comprises a packet-switching matrix 10, an MPLS gateway module 11, one or more interworking modules 12, a radio interface 13, a microwave transceiver 14 having an antenna 14a, a control platform 15, a backplane control bus 16, one or more first user-network interfaces 17, one or more second user-network interfaces 18 and a network-network interface 19. Preferably, the gateway GW comprises a respective interworking module 12 and a respective first user-network interface 17 for each type of traffic flow (E1 or SDH/SONET, Ethernet, ATM) that may be exchanged in the mobile communication system MCS.

The packet-switching matrix 10 is preferably implemented as an Ethernet switch. The MPLS gateway module 11 and the one or more interworking modules 12 are preferably implemented as NPs (Network Processor), ASICs or FPGAs. The radio interface 13 preferably comprises a modem 130 and a framer/deframer 131. The modem 130 is preferably implemented as an ASIC cooperating with a number of digital devices, while the framer/deframer 131 is preferably implemented as an ASIC or an FPGA. The microwave transceiver 14 is preferably implemented as an assembly of analog devices. The control platform 15 is preferably implemented as a CPU cooperating with a ROM and a RAM. The one or more second user-network interfaces 18 and the network-network interface 19 are preferably implemented as Ethernet interfaces.

The packet-switching matrix 10 is preferably connected to the MPLS gateway module 11, to the one or more interworking modules 12, to the radio interface 13, to the control platform 15 and to the one or more second user-network interfaces 18 by means of respective Ethernet links 20. Further, the radio interface 13 is preferably connected to the microwave transceiver 14 by means of an IF cable 21. Further, the one or more interworking modules 12 are preferably connected to the one or more first user-network interfaces 17, while the MPLS gateway module 11 is preferably connected to the network-network interface 19.

The control platform 15, the packet-switching matrix 10, the MPLS gateway module 11 and radio interface 13 are preferably connected to the backplane control bus 16. The control platform 15 preferably controls the operation of the other components through the backplane control bus 16.

In particular, the control platform 15 preferably manages static configurations of the packet-switching matrix 10 through the backplane control bus 16. For instance, if the packet-switching matrix 10 is an Ethernet switch, its static configurations are defined by the static entries of the forwarding table. On the other hand, the control platform 15 preferably exchanges frames (in particular, OAM frames or frames relating to the Management Plane or Control Plane) with the packet-switching matrix 10 through the Ethernet link 20.

The one or more first user-network interfaces 17 and the one or more second user network interfaces 18 preferably connect the gateway GW to respective local user apparatuses, such as for instance base stations, by means or wired optical or electrical links. The network-network interface 19 preferably connects the gateway GW to a node of the core network CN. The antenna 14a preferably connects the gateway GW to a node of the radio access network RAN.

The gateway GW preferably has a split-mount structure, i.e.: all the above mentioned components except the microwave transceiver 14 with the antenna 14a are located in an indoor unit, whereas the microwave transceiver 14 with the antenna 14a is located in an outdoor unit. The IF cable 21 connects the indoor unit and the outdoor unit.

The operation of the various blocks of the gateway GW will be now briefly described, assuming that the downstream traffic flow TF is received at the gateway GW from the core network CN. Since it has been assumed that the Layer 1 and Layer 2 connectivity in the core network CN is implemented by Ethernet, the MPLS packets Pk transporting the traffic flow TF are encapsulated in Ethernet frames.

Preferably, the Ethernet interface 19 receives the Ethernet frames and forwards them to the MPLS gateway module 11.

The MPLS gateway module 11 preferably extracts the MPLS packets Pk from the Ethernet frames. According to the above described first embodiment, the MPLS gateway module 11 preferably extracts the segments Sk of the traffic flow TF with the pseudo-wire labels L1 and the optional control words CW from the MPLS packets Pk and encapsulates the segments Sk with the pseudo-wire labels L1 and the optional control words CW in VLAN-tagged Ethernet frames Fr. According to the above described second embodiment, the MPLS gateway module 11 preferably extracts the Ethernet frames Fr from the MPLS packets Pk and inserts a VLAN identifier VLAN-id in the Ethernet frames Fr, so that they become VLAN-tagged Ethernet frames.

The MPLS gateway module 11 then forwards the Ethernet frames Fr to the packet switching matrix 10.

If the traffic flow TF is an Ethernet traffic flow and is directed to a local user apparatus connected to the gateway GW, the packet-switching matrix 10 preferably switches the Ethernet frames Fr towards one of the second user-network interfaces 18. On the other hand, if the traffic flow TF is not an Ethernet traffic flow and is directed to a local user apparatus connected to the gateway GW, the packet-switching matrix 10 preferably switches the Ethernet frames Fr towards one of the interworking modules 12. The interworking module 12 preferably extracts the segments of the traffic flow TF from the Ethernet frames Fr, recovers the original traffic flow TF and forwards it towards one of the first user-network interfaces 17.

If the traffic flow TF is directed to a base station connected to a node of the radio access network RAN (e.g. the node N2), the packet-switching matrix 10 preferably switches the Ethernet frames Fr according to their VLAN identifier VLAN-id to the radio interface 13. The radio interface 13 preferably processes the Ethernet frames Fr and sends them to the microwave transceiver 14.

The microwave transceiver 14 preferably transmits via radio the Ethernet frames Fr to a node of the radio access network RAN, that switches them according to the VLAN tagging option until they reach the node N2.

The operation of the various blocks in case of upstream traffic flows is symmetrical to the above described operation. A detailed description will not therefore be repeated.

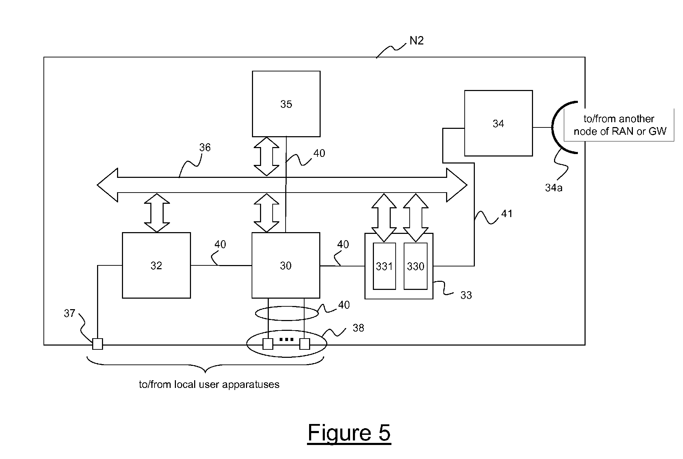

Figure 5 schematically shows the structure of the node N2 of the radio access network RAN according to a preferred embodiment of the present invention. For simplicity, it is assumed that the node N2 is a leaf of the tree topology of the radio access network. In other words, the node N2 may only receives downstream traffic flows directed to base stations locally connected to it, and it can not forward any downstream traffic flow to further nodes of the radio access network.

The node N2 preferably comprises a packet-switching matrix 20, one or more interworking modules 32, a radio interface 33, a microwave transceiver 34 having an antenna 34a, a control platform 35, a backplane control bus 36, one or more first user-network interfaces 37 and one or more second user-network interfaces 38. Preferably, the node N2 comprises a respective interworking module 32 and a respective first user-network interface 37 for each type of traffic flow (E1 or SDH/SONET, Ethernet, ATM) that may be exchanged in the mobile communication system MCS.

The packet-switching matrix 30 is preferably implemented as an Ethernet switch. The one or more interworking modules 32 are preferably implemented as NPs (Network Processor), ASICs or FPGAs. The radio interface 33 preferably comprises a modem 330 and a framer/deframer 331. The modem 330 is preferably implemented as an assembly of an ASIC and a number of digital devices, while the framer/deframer 331 is preferably implemented as an ASIC or an FPGA. The microwave transceiver 34 is preferably implemented as an assembly of analog devices. The control platform 35 is preferably implemented as a CPU cooperating with a ROM and a RAM. The one or more second user-network interfaces 38 are preferably implemented as Ethernet interfaces.

The packet-switching matrix 30 is preferably connected to the one or more interworking modules 32, to the radio interface 33, to the control platform 35 and to the one or more second user-network interfaces 38 by means of respective Ethernet links 40. Further, the radio interface 33 is preferably connected to the microwave transceiver 34 by means of an IF cable 41. Further, the one or more interworking modules 32 are preferably connected to the one or more first user-network interfaces 37.

The control platform 35, the packet-switching matrix 30, and the radio interface 33 are preferably connected to the backplane control bus 36. The control platform 35 preferably controls the operation of the other components through the backplane control bus 36.

In particular, the control platform 35 preferably manages static configurations of the packet-switching matrix 30 through the backplane control bus 36. For instance, if the packet-switching matrix 30 is an Ethernet switch, its static configurations are defined by the static entries of the forwarding table. On the other hand, the control platform 35 preferably exchanges frames (in particular, OAM frames or frames relating to the Management Plane or Control Plane) with the packet-switching matrix 30 through the Ethernet link 40.

The one or more first user-network interfaces 37 and the one or more user network second user network interfaces 38 preferably connect the node N2 to respective local user apparatuses, such as for instance base stations, by means or wired optical or electrical links. The antenna 34a preferably connects the node N2 to a further node of the radio access network RAN or to the gateway GW.

The node N2 preferably has a split-mount structure, i.e.: all the above mentioned components except the microwave transceiver 34 with the antenna 34a are located in an indoor unit, whereas the microwave transceiver 34 with the antenna 34a is located in an outdoor unit. The IF cable 41 connects the indoor unit and the outdoor unit.

The operation of the various blocks of the node N2 will be now briefly described, assuming that the Ethernet frames Fr carrying the traffic flow TF are received at the node N2 from the virtual local area network VLAN provisioned across the radio access network RAN.

The microwave transceiver 34 preferably receives via radio the Ethernet frames Fr from the gateway GW over the virtual local area network VLAN and forwards it to the radio interface 33.

The radio interface 33 preferably processes the Ethernet frames Fr and sends them to the packet-switching matrix 30.

If the traffic flow TF is an Ethernet traffic flow, the packet-switching matrix 30 preferably switches the Ethernet frames Fr towards one of the second user-network interfaces 38. On the other hand, if the traffic flow TF is not an Ethernet traffic flow, the packet-switching matrix 30 preferably switches the Ethernet frames Fr towards one of the interworking modules 32. The interworking module 32 preferably extracts the segments of the traffic flow TF from the Ethernet frames Fr, recovers the original traffic flow TF and forwards it towards one of the first user-network interfaces 37.

The operation of the various blocks in case of upstream traffic flows is symmetrical to the above described operation. A detailed description will not therefore be repeated.

As mentioned above, the node N2 shown in Figure 6 is a leaf of the tree topology of the radio access network RAN. The structure of the intermediate nodes of the tree topology is substantially the same as the one shown in Figure 6. In addition, an intermediate node preferably further comprises a further radio interface connected to the packet-switching matrix 30 and a further microwave transceiver connected to the further radio interface for implementing a radio connection with a further node of the radio access network located downstream in the tree topology.

## Claims

1. A method for transmitting a traffic flow (TF) in a radio communication system (MCS) comprising a core network (CN), a radio access network (RAN) and a gateway (GW) interfacing said core network (CN) and said radio access network (RAN), said method comprising:
a) providing a label switched path (LSP) between said gateway (GW) and a first node (N1) of said core network (CN), and providing a virtual local area network (VLAN) between said gateway (GW) and a second node (N2) of said radio access network (RAN);
b) associating to a segment (Sk, Fr) of said traffic flow (TF) a first label (L2) uniquely identifying said label switched path (LSP) and an identifier (VLAN-id) uniquely identifying said virtual local area network (VLAN), said identifier (VLAN-id) being biuniquely associated to said first label (L2);
c) in said core network (CN), transmitting a packet (Pk) comprising said segment (Sk, Fr) and said first label (L2) between said gateway (GW) and said first node (N1) along said label switched path (LSP), and in said radio access network (RAN), transmitting said segment (Sk, Fr) with said identifier (VLAN-id) between said gateway (GW) and said second node (N2) over said virtual local area network (VLAN).

2. The method according to claim 1 wherein, if said traffic flow (TF) is a downstream traffic flow, said step c) comprises:
c1) at said first node (N1), encapsulating said segment (Sk, Fr) in said packet (Pk) comprising said first label (L2), and label-switching said packet (Pk) along said label switched path (LSP);
c2) at said gateway (GW), extracting said segment (Sk, Fr) from said packet (Pk) and transmitting said segment (Sk, Fr) with said identifier (VLAN-id) over said virtual local area network (VLAN); and
c3) at said second node (N2), merging said segment (Sk) with other segments of said traffic flow (TF), thereby retrieving said traffic flow (TF).

3. The method according to claim 1, wherein, if said traffic flow (TF) is an upstream traffic flow, said step c) comprises:
c1') at said second node (N2), transmitting said segment (Sk, Fr) with said identifier (VLAN-id) over said virtual local area network (VLAN);
c2') at said gateway (GW), encapsulating said segment (Sk, Fr) in said packet (Pk) comprising said first label (L2) and label-switching said packet (Pk) along said label switched path (LSP); and
c3') at said first node (N1), extracting said segment (Sk, Fr) from said packet (Pk) and merging said segment (Sk) with other segments of said traffic flow (TF), thereby retrieving said traffic flow (TF).

4. The method according to any of the preceding claims wherein, in said step c), said transmitting said segment (Sk, Fr) with said identifier (VLAN-id) between said gateway (GW) and said second node (N2) over said virtual local area network (VLAN) comprises transmitting said segment (Sk) in a frame (Fr) comprising said identifier (VLAN-id) in a header thereof.

5. The method according to claim 4 wherein, in said step c):
- said transmitting said packet (Pk) comprising said segment (Sk, Fr) and said first label (L2) between said gateway (GW) and said first node (N1) along said label switched path (LSP) comprises transmitting in said packet (Pk) also a second label (L1) uniquely identifying said traffic flow (TF); and
- said transmitting said segment (Sk, Fr) with said identifier (VLAN-id) between said gateway (GW) and said second node (N2) over said virtual local area network (VLAN) comprises transmitting also said first label (L1) in said frame (Fr).

6. The method according to claim 5, wherein it further comprises:
b') associating to a further segment of a further traffic flow said first label (L2) and said identifier (VLAN-id);
c') in said core network (CN), transmitting a further packet comprising said further segment and said first label (L2) between said gateway (GW) and said first node (N1) along said label switched path (LSP), and in said radio access network (RAN), transmitting said further segment with said identifier (VLAN-id) between said gateway (GW) and said second node (N2) over said virtual local area network (VLAN).

7. The method according to claim 5 or 6, wherein in said step c):
- said transmitting said packet (Pk) comprising said segment (Sk, Fr) and said first label (L2) between said gateway (GW) and said first node (N1) along said label switched path (LSP) comprises transmitting in said packet (Pk) also a control word (CW) comprising information allowing to merge said segment (Sk) with said other segments of said traffic flow (TF) for retrieving said traffic flow (TF); and
- said transmitting said segment (Sk, Fr) with said identifier (VLAN-id) between said gateway (GW) and said second node (N2) over said virtual local area network (VLAN) comprises transmitting also said control word (CW) in said frame (Fr).

8. The method according to claim 4, wherein said transmitting said segment (Sk, Fr) with said identifier (VLAN-id) between said gateway (GW) and said second node (N2) over said virtual local area network (VLAN) comprises inserting said identifier (VLAN-id) in said segment (Sk) and transmitting said segment (Sk) with said identifier (VLAN-id) inserted therein over said virtual local area network (VLAN).

9. The method according to any of the preceding claims, wherein it further comprises:
- associating to an operation and maintenance packet said first label (L2) and said identifier (VLAN-id);
- in said core network (CN), transmitting said operation and maintenance packet comprising said first label (L2) between said gateway (GW) and said first node (N1) along said label switched path (LSP);
- in said radio access network (RAN), transmitting a still further frame comprising said operation and maintenance packet and said identifier (VLAN-id) in a header thereof between said gateway (GW) and said second node (N2) over said virtual local area network (VLAN); and
- at said first node (N1) and at said second node (N2), processing said operation and maintenance packet for performing an end-to-end operation and maintenance function of said traffic flow (TF).

10. The method according to any of the preceding claims, wherein in said step b), said associating comprises mapping said first label (L2) into said identifier (VLAN-id), said first label (L2) having a size in bits longer than said identifier (VLAN-id).

11. The method according to any of the preceding claims, wherein:
- if said traffic flows (TF) comprises a sequence of time division multiplexing frames, said segment (Sk) comprises at least a portion of a time division multiplexing frames;
- if said traffic flows (TF) comprises a sequence of asynchronous transfer mode cells, said segment (Sk) comprises one or more asynchronous transfer mode cells; and
- if said traffic flows (TF) comprises an sequence of Ethernet frames, said segment (Fr) comprises an Ethernet frame.

12. A gateway (GW) suitable for interfacing a core network (CN) and a radio access network (RAN) of a mobile communication system (MCS), said gateway (GW) comprising:
- a gateway module (11) configured to associate, to a segment (Sk, Fr) of a traffic flow (TF) exchanged between a first node (N1) of said core network (CN) and a second node (N2) of said radio access network (RAN), a first label (L2) uniquely identifying a label switched path (LSP) between said gateway (GW) and said first node (N1), and an identifier (VLAN-id) uniquely identifying a virtual local area network (VLAN) between said gateway (GW) and said second node (N2), said identifier (VLAN-id) being biuniquely associated to said first label (L2);
- a network-network interface (19) configured to exchange, with said first node (N1) along said label switched path (LSP), a packet (Pk) comprising said segment (Sk, Fr) and said first label (L2); and
- a radio interface (13) configured to exchange, with said second node (N2) over said virtual local area network (VLAN), said segment (Sk, Fr) with said identifier (VLAN-id).

13. A node (N2) of a radio access network (RAN) for a mobile communication system (MCS), said node (N2) comprising:
- an interworking module (32) configured to associate, to a segment (Sk, Fr) of a traffic flow (TF) exchanged between said node (N2) and a further node (N1) of a core network (CN) connected to said radio access network (RAN) by means of a gateway (GW), an identifier (VLAN-id) uniquely identifying a virtual local area network (VLAN) between said node (N2) and said gateway (GW), said identifier (VLAN-id) being biuniquely associated to a label (L2) uniquely identifying a label switched path (LSP) between said gateway (GW) and said further node (N1); and
- a radio interface (33) configured to exchange, with said gateway (GW) over said virtual local area network (VLAN), said segment (Sk, Fr) with said identifier (VLAN-id).

14. A radio access network (RAN) for a mobile communication system (MCS), wherein said radio access network (RAN) comprises a node (N2) according to claim 13.

15. A mobile communication system (MCS) comprising a core network (CN), a radio access network (RAN) and a gateway (GW) suitable for interfacing said core network (CN) and said radio access network (RAN), wherein said radio access network (RAN) is according to claim 14 and said gateway (GW) is according to claim 12.
